# EUROPÄISCHE PATENTSCHRIFT

(11) **EP 1 431 629 B1**
(45) Veröffentlichungstag und Bekanntmachung des Hinweises auf die Patenterteilung: **20.02.2008**
(21) Anmeldenummer: 03027604.2
(22) Anmeldetag: 02.12.2003
(51) Int. Cl.: F16H 63/30, F15B 15/14, F16J 1/14, F16J 1/22

(54) **Stellvorrichtung zum Betätigen einer Schaltschiene**
Actuating mechanism for actuating a shift rail
Dispositif actionneur pour commander une tige de commande

(30) Priorität: 21.12.2002 DE 10260425
(43) Veröffentlichungstag der Anmeldung: 23.06.2004
(73) Patentinhaber: Volkswagen Aktiengesellschaft, 38436 Wolfsburg (DE)
(72) Erfinder: Müller, Frank, 38165 Essenrode (DE); Kowalski, Meinhard, 34305 Niedenstein (DE); Becker, Volker, 38518 Gifhorn (DE)

(56) Entgegenhaltungen:
- EP-A- 0 061 875
- EP-A- 1 164 316
- DE-A1- 2 128 982
- DE-A1- 10 041 990
- DE-B- 1 216 630
- DE-U1- 20 120 394
- GB-A- 2 045 389
- US-A- 5 442 993

## Beschreibung

Die Erfindung betrifft eine Stellvorrichtung zum Betätigen einer Schaltschiene, insbesondere für ein Stufenwechselgetriebe eines Kraftfahrzeuges, bei der zum Wechseln eines Ganges die Schaltschiene über jeweils einen an den längsseitigen Enden der Schaltschiene angeordneten druckbeaufschlagbaren Kolben hydraulisch oder pneumatisch axial verschiebbar ist, wobei mittels kolbenseitig und schaltschienenseitig ausgebildeten Verbindungsmitteln eine flexible Verbindung zwischen der Schaltschiene und dem Kolben hergestellt ist und wobei die Verbindungsmittel kolbenseitig an dem Kolben ausgebildet sind.

Bei Stufenwechselgetrieben von Kraftfahrzeugen wird zum Gangwechsel eine Schaltmuffe mit einer Schaltgabel verschoben. Die Schaltgabel ist an einer Schaltschiene oder Schaltstange befestigt, die zur leichten Verschiebbarkeit an ihren Enden gleitgelagert oder vorzugsweise kugelgelagert ist. Die Gänge bestehen jeweils aus einem Festrad und einem Losrad. Während das Festrad mit einer Getriebewelle drehfest verbunden ist, ist das Losrad auf einer anderen Getriebewelle drehbar gelagert und zur Schaltung des betreffenden Gangs über eine zugeordnete, formschlüssig wirksame Gangschaltkupplung drehfest mit der anderen Getriebewelle verbindbar. Die Gangschaltkupplung ist über die Schaltmuffe schließ- und trennbar, deren Betätigung durch eine Axialverschiebung der Schaltschiene realisiert wird. Einer Schaltmuffe bzw. Schaltschiene sind je nach Bauart jeweils ein oder zwei Gänge zugeordnet.

In herkömmlichen Getrieben wird die Schaltschiene mechanisch mit einem Schaltfinger verschoben. Moderne Getriebe mit einer hohen Anzahl von Gängen und zusätzlichen Getriebefunktionen, beispielsweise Doppelkupplungsgetriebe erfordern einen hohen mechanischen Konstruktionsaufwand. Zur Reduzierung dieses Aufwandes werden zunehmend automatisch ansteuerbare hydraulische oder pneumatische Stellvorrichtungen zur Betätigung der Getriebefunktionen, u.a. auch zur Betätigung der Schaltschiene eingesetzt. Dabei ist den Enden der Schiene jeweils ein Kolben zugeordnet, der mit einem Druckmittel, beispielsweise Hydrauliköl, beaufschlagbar ist. Der Kolben wird in einem Kolbenraum geführt und übt bei dem Schaltvorgang über das Druckmittel stirnseitig eine Kraft auf die Schaltschiene aus, die zu der gewünschten axialen Verschiebung führt.

Der Kolben dichtet üblicherweise über seinen Durchmesser und ist gegen Leerlaufen mit einer Dichtlippe versehen, so dass Luft im Kolbenraum schnell nach außen entweichen kann. Dabei kann es jedoch zu Regelungsproblemen kommen, wenn sich der Kolben unabhängig von der Schaltschiene bewegt, d.h. sich von der Schaltschiene ablöst, und dadurch in der Folge ein unerwünschter und schädlicher Leerweg entsteht. Abhilfe kann durch eine Verbindung zwischen der Schaltschiene und dem Kolben geschaffen werden.

Eine derartige Verbindung zwischen einem Kolben und einer Schaltstange ist aus einer, in der EP 1 164 316 A2 beschriebenen, hydraulischen Stellvorrichtung bekannt. Darin ist vorgesehen, dass die Schaltstange mit dem Kolben mittels einer Schnappverbindung verbunden ist. Der Kolben ist mit einer Aussparung zur Aufnahme eines Endes der Schaltstange versehen und weist eingangs der Aussparung zwei Nasen auf, die in zwei zugeordneten Vertiefungen der Schaltstange eingerastet sind. Der Kolben weist einen Führungsring auf, der in einer Zylinderbohrung eines Getriebegehäuses geführt ist. Über den Kolben wird die Schaltstange beim einem Schaltvorgang verschoben und in der Zylinderbohrung geführt. Auf ein, an der Schaltschiene angeordnetes, gesondertes Führungslager wird verzichtet. Die EP 1164316 A2 offenbart eine Stellvorrichtung mit allen Merkmalen der Oberbegriffe der unabhängigen Ansprüche 1, 7, 8 und 11.

Nachteilig bei der bekannten Stellvorrichtung wirkt sich aus, dass die Schnappverbindung im Zusammenwirken mit der Führung der Schaltstange über den mit dem Kolben fest verbundenen Führungsring, eine relativ starre Verbindung mit direkter Kraftkopplung zwischen dem Kolben und der Schaltstange darstellt. Bei einem Schaltvorgang werden jedoch Deformationskräfte, die als Querkräfte durch die Schaltkräfte entstehen, auf die Schaltstange ausgeübt. Diese Querkräfte wirken über die relativ starre Verbindung direkt auf den Kolben. In der Folge können unerwünschte Klemmkräfte auftreten, die zu einer Schwergängigkeit der Schaltstange in der Zylinderbohrung mit erhöhten Schaltkräften und einem erhöhten Verschleiß führen. Dies wird noch dadurch verstärkt, dass die Schaltschiene kein eigenes Führungslager zur Entlastung des Kolbens aufweist.

Weiterhin ist aus der DE 201 20 394 U1 eine Schaltschiene bekannt, an deren stirnseitigen Enden jeweils ein kolbenförmiges Lagerelement angeordnet ist. Die Kolbenelemente sind an den Enden angespritzt und stellen eine feste Verbindung zu der Schaltschiene dar.

Nachteilig wirkt sich aus, dass durch die feste Verbindung, die Deformationskräfte auf die Schaltschiene in vollem Umfang auf den Kolben wirken können, wodurch hohe Klemmkräfte und einer hoher Verschleiß entstehen kann. Weiterhin erfordert die feste Verbindung eine exakte Flucht der beiden längsseitig angespritzten Kolbenelemente, was einen hohen fertigungstechnischen Aufwand darstellt.

Aus der DE 21 28 982 A ist ein hydraulisch oder pneumatisch beaufschlagter Arbeitszylinder bekannt, dessen Kolbenstange den Kolben in einer ersten Führung durchsetzt und weiter in einer zweiten, am Zylinder festgelegten Führung geführt wird. Zur Vermeidung von Druckspitzen im hydraulischen oder pneumatischen System ist die Kolbenstange über zwei Tellerfedern beidseitig des Kolbens mit diesem verbunden. Hierdurch wird eine axial elastische Verbindung zwischen Kolben und Kolbenstange realisiert, die Druckspitzen abpuffert und so eine Überlastung des hydraulischenlpneumatischen Systems verhindert.

Nachteilig dabei ist, dass aufgrund der doppelten Führung der Kolbenstange keine senkrecht zur Kolbenstange angreifenden Deformationskräfte ausgeglichen werden können.

Aus der EP 0 061 875 A2 ist eine mit einem Hydraulikkolben verbundene Schaltstange bekannt, die den Kolben axial durchsetzt, wobei im Inneren des Kolbens eine einerseits gegen die Kolbeninnenwand und andererseits gegen eine Flanke der Schaltstange abgestützte Feder angeordnet ist, um axiale Stöße abzupuffern. Auch dieses bekannte System ist nicht zur Kompensation von senkrecht zur Schaltstangenachse angreifenden Deformationskräften geeignet.

Aus der DE 1 216 630 ist es bekannt, einen Kolbenkörper und eine Kolbenstange mit einem radialen Spiel zu versehen. Die Kolbenstange weist dabei an ihrem Kopfende einen den inneren Durchmesser des Kolbens überspannenden, radial ausgerichteten Steg auf, dessen Enden Ausnehmungen in der Kolbenwand durchsetzen. Auf diese Weise kann die Kolbenstange in einer Richtung parallel zu dem Steg radial verschoben werden. Nachteilig bei dieser Gestaltung ist dass eine radiale Verschiebung der Kolbenstange senkrecht zur Ausrichtung des Steg nicht möglich ist.

Die US 5,442,993 offenbart eine Kolbenstange, die über ein als äquatorialer Kugelschalenabschnitt ausgestaltetes Elastomerelement mit dem Kolben verbunden ist. Dies gewährt zwar im Neuzustand eine allseitige radiale Flexibilität der Verbindung zwischen Kolben und Kolbenstange.

Aufgabe der vorliegenden Erfindung ist es daher, Alternativen zu den bekannten Stellvorrichtungen anzugeben, die eine Verbindung zwischen einem Kolben und einer Schaltschiene, die ein Ablösen des Kolbens von der Schaltschiene verhindert, aufweisen, wobei eine Übertragung von Deformationskräften, auf den Kolben, die durch die Schaltkräfte bei einem Gangwechsel auf die Schaltschiene ausgeübt werden, weitgehend vermieden wird.

Die Aufgabe wird erfindungsgemäß durch den Gegenstand der nebengeordneten Ansprüche 1, 7, 8 und 11 gelöst. Zum einen wird die Aufgabe dadurch gelöst, dass die Verbindungsmittel schaltschienenseitig an einem an der Schaltschiene angeordneten Führungslager der Schaltschiene ausgebildet sind.

Gleichfalls wird die Aufgabe dadurch gelöst, dass der Kolben als ein Napf mit einem der Schaltschiene zugewandten nach innen gebogenen unterbrochenen Rand ausgebildet ist, mit zwei Aussparungen, in die ein als ein Vorsprung ausgebildeter Rand der Schaltschiene eingesteckt ist, so dass nach einer Verdrehung des Kolbens um 90°, die Schaltschiene durch den den Schaltschienenrand umgreifenden Napfrand, gegen ein Ablösen des Kolbens von der Schaltschiene gesichert ist, und dass der Kolben durch zwei an der Innenhülse eines an der Schaltschiene angeordneten Führungslagers der Schaltschiene angeordnete, in die Aussparungen greifende Nasen, gegen ein Zurückdrehen gesichert ist.

Weiter wird die Aufgabe dadurch gelöst, dass die Verbindungsmittel schaltschienenseitig als mindestens ein an der Schaltschiene ausgebildeter Federbügel ausgestaltet sind und eine radial flexible Verbindung darstellen.

Schließlich wird die Aufgabe dadurch gelöst, dass die Verbindungsmittel schaltschienenseitig als eine an der Schaltschiene ausgebildete Schwalbenschwanzverbindung ausgestaltet sind, bei der ein schwatbenschwanzförmiger Vorsprung des Kolbens in eine als Gegenstück zu dem Vorsprung ausgebildete Aussparung an der Schaltschiene seitlich eingeschoben ist.

Dadurch, dass die Verbindung zwischen der Schaltschiene und dem Kolben flexibel ausgebildet ist, sind Ausgleichsbewegungen zwischen Kolben und Schaltschiene, insbesondere radiale Relativbewegungen möglich. Somit können die auftretenden Deformationskräfte im Wesentlichen über das Führungslager der Schaltschiene abgeleitet werden und wirken nicht auf den Kolben. Andererseits kann sich der Kolben nicht von der Schaltschiene ablösen, d.h. in unerwünschter Weise unabhängig von der Schaltschiene verstellen. Die Verbindung kann über die beweglichen Eigenschaften hinaus auch elastische Eigenschaften aufweisen. Durch die variablen Möglichkeiten der direkten Verbindung mit der Schaltschiene oder der indirekten Verbindung über das Führungslager, kann die an die jeweilige Getriebekonstruktion, im Hinblick auf den zur Verfügung stehenden Bauraum, eine leichte Montage und den Kostenaufwand, günstigste Verbindung realisiert werden. Dadurch ist die Stellvorrichtung an die verschiedenen gängigen Getriebekonstruktionen bei kleinem Bauraumanspruch leicht und kostengünstig anpassbar und vielseitig verwendbar.

In den Unteransprüchen 2-6, 9, 10 und 12 sind vorteilhafte Weiterbildungen der Erfindung beschrieben:

Gemäß den bevorzugten Ausführungsformen der Erfindung nach den Unteransprüchen 2 bis 6ist die flexible Verbindung zwischen dem Kolben und der Schaltschiene mittels einer Innenhülse des als eine Kugelführung ausgebildeten Führungslagers hergestellt.

Die Verbindungen über das Führungslager zeichnen sich durch eine besonders hohe Flexibilität aus. Die Innenhülse des Kugellagers kann auf besonders einfache Weise konstruktiv mit verschiedenen Verbindungsmitteln, insbesondere mit Nasen, Aussparungen, Haltelaschen, Halteharken oder Haltehaken, die mit entsprechenden an dem Kolben angeordneten Gegenstücken zusammenwirken, ausgestattet werden. Dadurch wird die Schaltschiene zuverlässig an dem Kolben gehalten, ohne dass eine starre Verbindung zwischen der Schaltschiene und dem Kolben aufgebaut wird.

Nach den weiteren bevorzugten Ausführungsformen der Unteransprüche 9 und 10 ist die flexible Verbindung zwischen dem Kolben und der Schaltschiene mittels mindestens eines Federbügels gebildet.

Federelemente sind durch ihre Elastizitätseigenschaften in besonderer Weise für eine direkte flexible Verbindung des Kolbens mit der Schaltschiene geeignet. Der Kolben wird über einen Federbügel an der Schaltschiene gehalten, gleichzeitig sind radiale und axiale Relativbewegungen zwischen Kolben und Schaltschiene möglich, die insbesondere flexibler im Vergleich zu einer direkten Schnappverbindung sind. Dabei bleibt durch die Elastizität der Feder, der Kolben stets in engem Kontakt zu der Schaltschiene, wodurch eine optimale Regelbarkeit der Stellvorrichtung gewährleistet bleibt.

Gemäß einer weiteren bevorzugten Ausführungsform der Erfindung nach Anspruch 11, ist die flexible Verbindung als eine Schwalbenschwanzverbindung ausgebildet, bei der ein schwalbenschwanzförmiger Vorsprung des Kolbens in eine als Gegenstück zu dem Vorsprung ausgebildete Aussparung an der Schaltschiene seitlich eingeschoben ist.

Die Schwalbenschwanzverbindung stellt eine besonders einfach herzustellende und zu montierende Verbindung dar. Dabei ist ein ausreichender Spielraum, d.h. Beweglichkeit zwischen den Schwalbenschwanzbauteilen vorgesehen, um eine entsprechende Beweglichkeit der Verbindung zu gewährleisten.

Nach den weiteren bevorzugten Ausführungsformen des Unteranspruchs 12 der Erfindung ist der Kolben als ein Kunststoffkolben oder als ein Blechkolben ausgebildet.

Der Herstellung des Kunststoffkolbens ist besonders kostengünstig. Durch Auswahl eines verschleißfesten Kunststoffs wird eine hohe Lebensdauer erzielt. Der Blechkolben kann besonders einfach mit verschiedenen Verbindungselementen, wie Laschen, Klammern Harken oder einem Bund ausgebildet werden. Der Kolbenkörper des Blechkolben kann auch besonders vorteilhaft als Element mit Elastizitätseigenschaften ausgebildet werden, um die Elastizität der Verbindung zu unterstützen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

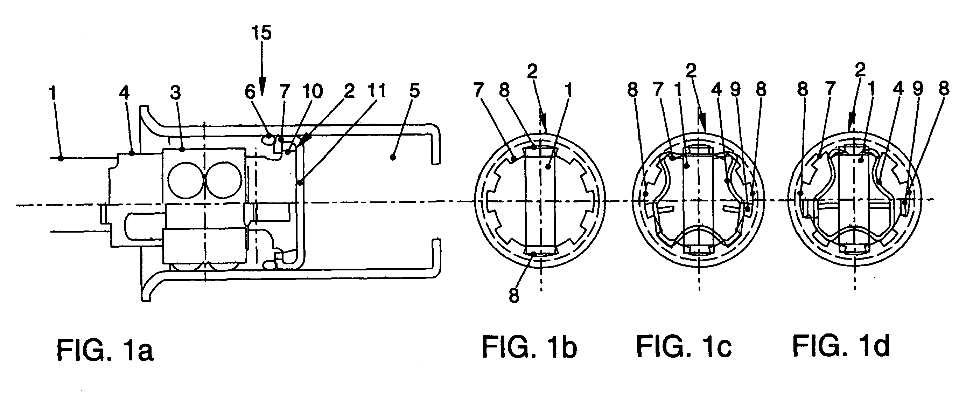

Es zeigen
- Figur 1:: a) eine Seitenansicht im Schnitt einer ersten Ausführungsform der Stellvorrichtung mit einer Verbindung zwischen einem Kolben und einer Schaltschiene, bei der der Kolben als ein Napf mit einem unterbrochenen Rand ausgebildet ist,
b) eine Querschnittansicht eines ersten Montageschrittes, bei dem die Schaltschiene mit einem vorstehenden Rand in zwei Aussparungen des Napfes eingesteckt ist,
c) eine Querschnittansicht eines zweiten Montageschrittes, bei dem der Kolben um 90° gedreht ist und zwei Nasen an einer Innenhülse einer Kugelführung in die Aussparungen des Napfes greifen und
d) eine Querschnittansicht der fertig montierten Verbindung, bei der der Kolben gegen ein Zurückdrehen gesichert ist,
- Figur 2:: a) eine Seitenansicht im Schnitt einer zweiten Ausführungsform der Verbindung, bei der zwei Haltelaschen an der Innenhülse in einen nicht unterbrochenen napfförmigen Kolben greifen,
b) eine Draufsicht im Schnitt auf die zweite Ausführungsform und
c) eine Querschnittansicht der zweiten Ausführungsform,
- Figur 3:: a) eine Seitenansicht im Schnitt einer dritten Ausführungsform der Verbindung, bei der zwei Halteharken an der Innenhülse in eine Dichtlippe des Kolbens einharken und
b) eine Draufsicht im Schnitt auf die dritte Ausführungsform,
- Figur 4:: a) eine Seitenansicht im Schnitt einer vierten Ausführungsform der Verbindung, bei der ein aus zwei Blechen gebauter Kolben auf die Innenhülse aufgesteckt wird, in der oberen Bildhälfte mit der nach rechts verschobenen Innenhülse in einer ersten Montagestellung und in der unteren Bildhälfte mit der nach links verschobenen Innenhülse in einer zweiten Montagestellung,
b) ein Detail der ersten Montagestellung in einer Seitenansicht im Schnitt und
c) eine Querschnittansicht der montierten Verbindung,
- Figur 5:: a) eine Seitenansicht im Schnitt einer fünften Ausführungsform der Verbindung, bei der eine Halteklammer an den Kolben angeschweißt ist, die in die Innenhülse eingehängt ist,
b) eine Seitenansicht im Schnitt der Halteklammer,
c) eine Draufsicht im Schnitt auf die Halteklammer und
d) eine Querschnittansicht der montierten Verbindung,
- Figur 6:: a) eine Seitenansicht im Schnitt einer sechsten Ausführungsform der Verbindung mit einem Federbügel,
b) eine Querschnittansicht der montierten Verbindung und
c) eine perspektivische Darstellung der Schaltschiene mit der Kugelführung und dem Federbügel,
- Figur 7:: a) eine Seitenansicht im Schnitt einer siebten Ausführungsform der Verbindung mit einer weiteren Ausführungsform des Federbügels,
b) eine Querschnittansicht der montierten Verbindung und
c) eine perspektivische Darstellung der Schaltschiene mit dem Federbügel und
- Figur 8:: a) eine Seitenansicht im Schnitt einer achten Ausführungsform der Verbindung, die als eine exzentrische Schwalbenschwanzverbindung ausgebildet ist und
b) und
c) zwei Querschnittansichten der Verbindung, bei denen die Schaltschiene in einer ersten und in einer zweiten Montagestellung der Schaltschiene verschieden weit seitlich in eine Ausnehmung des Kolbens eingeschoben ist.

Eine Stellvorrichtung zum Betätigen einer Schaltschiene 1 besteht im Wesentlichen aus je einem Kolben 2, der mit Hilfe von Verbindungsmitteln mit den längsseitigen Enden der Schaltschiene 1 durch eine flexible Verbindung 15, 25, 35, 45, 55, 65, 75, 85, verbunden ist.

Die beiden Kolben 2 dienen zum Hin- und Herschieben der Schaltschiene 1 in axialer Richtung. Beide Kolben 2 sind spiegelsymmetrisch angeordnet und identisch aufgebaut, so dass sich die Beschreibung im Folgenden auf einen Kolben 2 beschränkt. Der Kolben 2 ist in einem zylindrischen Kolbenraum 5 geführt. Er dichtet über seinen Durchmesser und ist gegen Leerlaufen mit einer anvulkanisierten umlaufenden Dichtlippe 6 aus Gummi versehen. Über die Dichtlippe 6 kann vorhandene Luft aus dem Kolbenraum 5 entweichen. Die Schaltschiene 1 ist aus einem Blechteil mit rechteckförmigem Querschnitt gefertigt, dass an den Enden mit einem Führungslager 3, vorteilhaft als eine Kugelführung ausgebildet, kugelgelagert ist, so dass eine leichte axiale Verschiebbarkeit der Schaltschiene 1 gewährleistet ist. Die Kugelführung 3 ist auf an sich bekannte Weise mit einer Innenhülse 4 versehen. Der Kolben 2 kann durch Druckbeaufschlagung hydraulisch verschoben werden, so dass sich die Schaltschiene über die flexible Verbindung 15, 25, 35, 45, 55, 65, 75, 85 zwischen dem Kolben 2 und der Schaltschiene 1 axial verschieben lässt, um einen Gangwechsel durchzuführen, ohne dass sich einerseits bei der Betätigung der Schaltschiene 1 der Kolben 2 von der Schaltschiene 1 ablösen kann, und andererseits die auf die Schaltschiene 1 ausgeübten Schaltkräfte auf den Kolben 2 in unerwünschter Weise rückwirken.

Eine ersten Ausführungsform der Erfindung mit der Verbindung 15 ist in den Figuren 1a-d dargestellt. Dabei ist der Kolben 2 als ein aus Blech geformter Napf 11 mit einem unterbrochenen Rand 7 ausgebildet. Der Napfrand 7 ist zu der Schaltschiene 1 hin nach innen gebogen. Die Schaltschiene 1 weist ihrerseits stirnseitig an ihrem Ende einen überstehenden Rand 10 auf. In dem Napfrand 7 sind zwei, mindestens den Querdurchmesser des Randes 10 aufweisende Aussparungen 8 vorgesehen, in die die Schaltschiene 1 in einem ersten Montageschritt eingeschoben wird. In einem zweiten Montageschritt wird der Napf 11 um 90° gedreht. Dabei umgreift der Napfrand 7 den Schienenrand 10. Die Unterbrechungen des Napfrandes 7 sind in ihrem Durchmesser kleiner als der Durchmesser des Schienerandes 10. In der verdrehten Stellung wird der Schienerand 10 somit durch den Napfrand 7 gehalten. Gleichzeitig greifen zwei an der Innenhülse 4, an der dem Napf 11 zugewandten Seite angeordnete Nasen 9, in die nun zu den Nasen 9 benachbarten Aussparungen 8 ein und sichern den Napf 11 gegen eine Rückdrehbewegung. Somit ist der Kolben 2 mit der Schaltschiene 1 beweglich verbunden und gleichzeitig gegen ein Ablösen bei der Betätigung der Schaltschiene 1 gesichert.

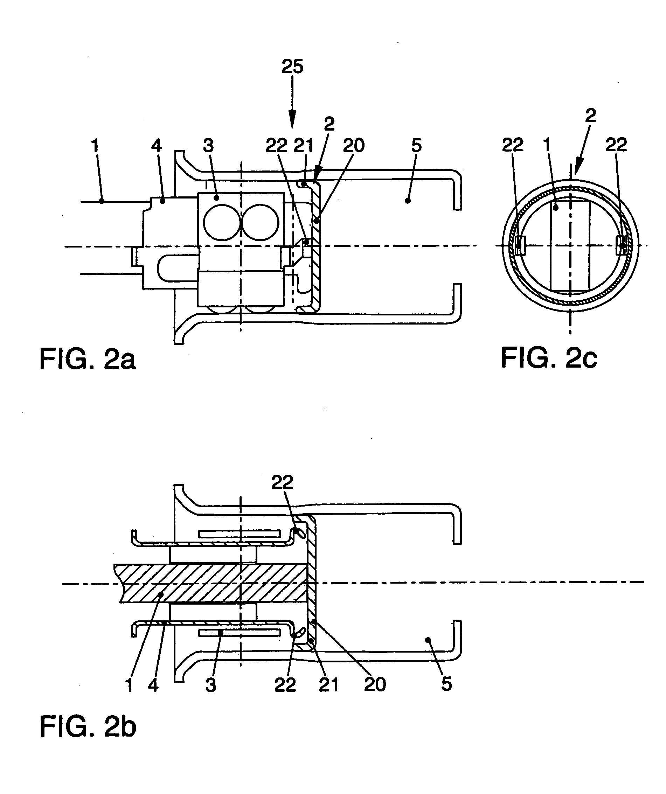

Eine zweite Ausführungsform der Erfindung mit der Verbindung 25 ist in den Figuren 2a-c dargestellt. Dabei wird der Kolben 2 an der Innenhülse 4 befestigt. An der Innenhülse 4 sind zwei Haltelaschen 22 angeordnet. Der Kolben 2 ist hier als ein, dem Napf 11 ähnlicher, Napf 20 mit einem nicht unterbrochenem Napfrand 21 ausgebildet. Die Haltelaschen 22 greifen in den Napf 20 ein, wodurch der Kolben 2 gegen die Innenhülse 4, bzw. gegen die Schaltschiene 1 gehalten wird.

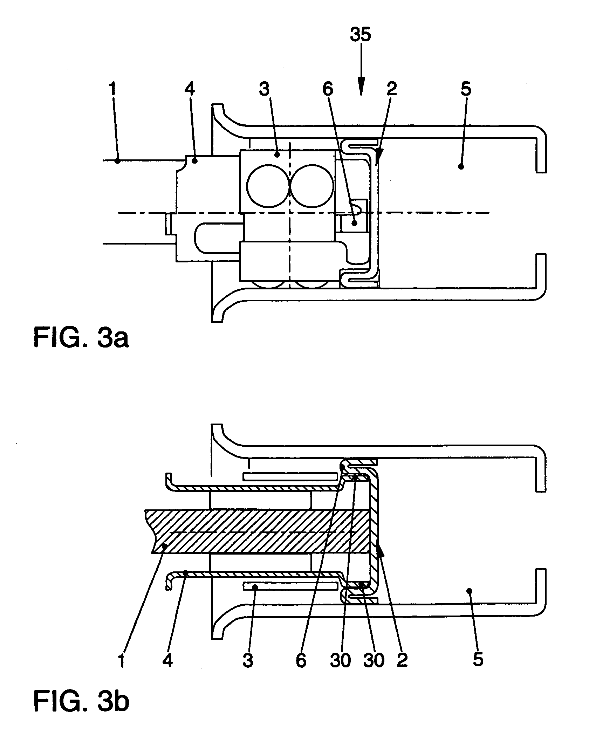

Eine dritte Ausführungsform der Erfindung mit der Verbindung 35 zeigen die Figuren 3a+b.

Hierbei ist der Kolben 2 wiederum an der Innenhülse 4 befestigt. An der Innenhülse 4 sind zwei Halteharken 30 ausgebildet, die in das anvulkanisierte Gummi der Dichtlippe 6 eingeharkt sind.

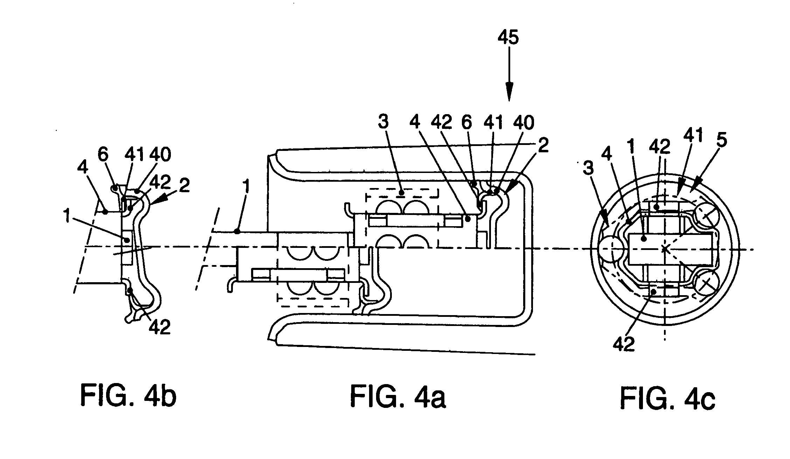

Eine vierte Ausführungsform der Erfindung mit der Verbindung 45 ist in den Figuren 4a-c dargestellt. Auch hier ist der Kolben 2 an der Innenhülse 4 befestigt. Der Kolben 2 ist aus zwei Blechen, einem Außenteil 40 und einem Innenteil 41, gebaut. Das Innenteil 41 ist als ein nach innen gebogener Bund ausgebildet. Das Außenteil 40 weist einen nach innen gewölbten, zu der Schaltschiene 1 hin benachbarten, Mittelabschnitt auf. An der Innenhülse 4 sind, benachbart zu dem Bund, zwei Haltehaken 42 angeordnet. Der Montagevorgang läuft in zwei Schritten ab: Zunächst wird die Innenhülse 4 nach rechts verschoben und der Kolben einseitig mit dem oberen Haken 42 der Hülse 4 verhakt. Anschließend wird der untere Teil aufgesteckt und die Hülse 4 nach links verschoben.

Dabei kommt der Mittelabschnitt des Außenteils 40 mit der Stirnseite der Schaltschiene 1 zum Anliegen und wird axial vorgespannt. Gleichzeitig wird über den Bund und die Haken 42 die Verbindung 45 radial zentriert.

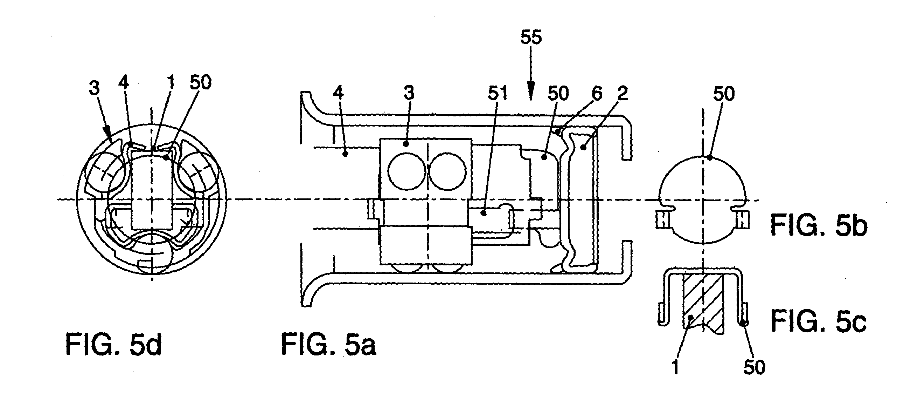

Eine fünfte Ausführungsform der Erfindung mit der Verbindung 55 zeigen die Figuren 5a-d.
Hierbei ist an den Kolben 2 eine Halteklammer 50 angeschweißt. Die Halteklammer 50 wird in zwei Aussparungen 51 in der Innenhülse 4 eingehängt.

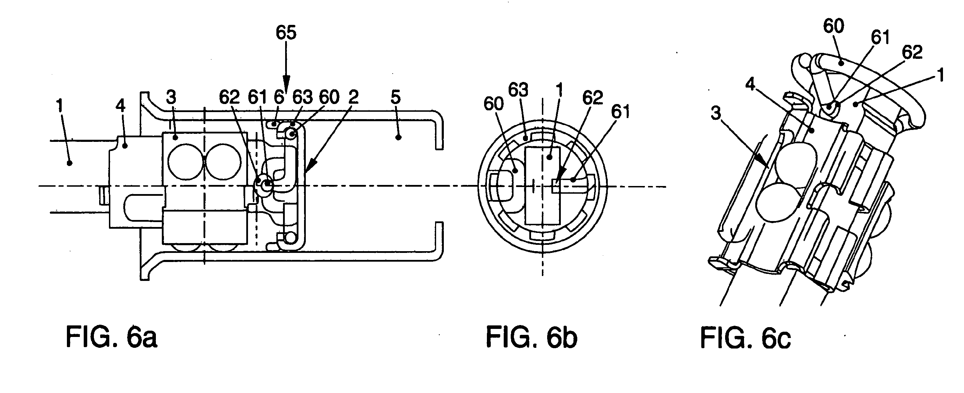

Eine sechste Ausführungsform der Erfindung mit der Verbindung 65 ist in den Figuren 6a-c dargestellt. Die Verbindung 65 ist als eine elastische Befestigung des Kolbens 2 an der Schaltschiene 1 mit einem als ein Federbügel 60 ausgebildeten Federelement ausgeführt. Der ringförmige Federbügel 60 ist in einen unterbrochenen Rand 63 des Kolbens 2 eingesetzt. Der Kolben 2 ist bei dieser Ausführungsform, abgesehen von den hier nicht vorgesehenen Aussparungen 8, baugleich mit dem Napf 11. Ein abgebogenes Ende 61 des Federbügels 60 greift in ein Loch 62 in der Schaltschiene 1 ein, wodurch der Kolben 2 gegen die Schaltschiene 1 elastisch gehalten wird.

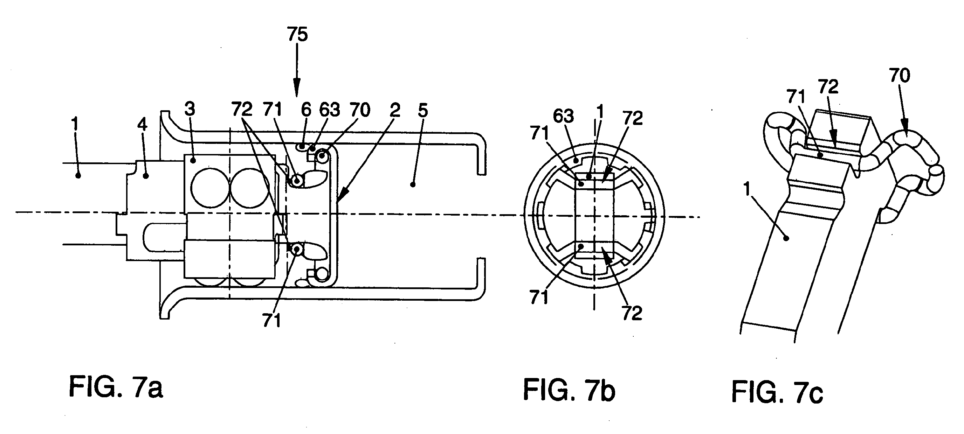

Eine siebte Ausführungsform der Erfindung mit der Verbindung 75 zeigen die Figuren 7a-c. Die Verbindung 75 beruht auf dem gleichen Prinzip wie die Verbindung 65. Hierbei ist das Federelement jedoch als ein Doppelfederbügel 70 ausgebildet. Der Doppelfederbügel 70 weist zwei zu der Schaltschiene 1 hin abgebogene Bügelteile 71 auf, die in zwei benachbarte Ausnehmungen 72 der Schaltschiene 1 eingreifen.

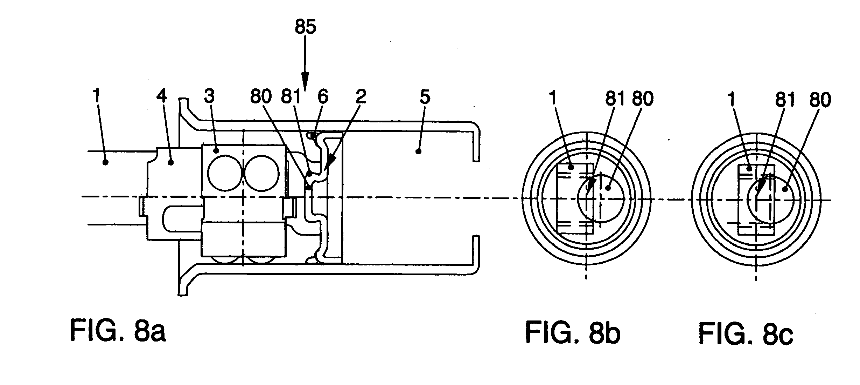

Schließlich ist eine achte Ausführungsform der Erfindung mit der Verbindung 85 in den Figuren 8a-c dargestellt. Die Verbindung 85 ist als eine sogenannte Schwalbenschwanzverbindung ausgebildet. Der Kolben 2 ist hier als Blechkolben mit einem schwalbenschwanzförmigen Vorsprung 80 ausgeformt. Der Vorsprung 80 wird bei der Montage seitlich in ein als eine Ausnehmung 81 in der Schaltschiene 1 ausgebildetes entsprechendes Gegenstück eingeschoben. Die Ausnehmung 81 ist seitlich aus der Schaltschiene 1 bis zu einem Anschlag, d.h. nicht durchgehend, ausgenommen. Dadurch ergibt sich eine exzentrische Anordnung. In einer ersten Position (Fig. 8 b) ist die Schiene 1 teilweise seitlich eingeschoben, in einer zweiten Position ist die Schiene 1 bis zum Anschlag eingeschoben und hat ihre Endposition erreicht.

### BEZUGSZEICHENLISTE

- 1: Schaltschiene
- 2: Kolben
- 3: Führungslager der Schaltschiene 1
- 4: Innenhülse des Führungslagers 3
- 5: Kolbenraum
- 6: Dichtlippe des Kolbens 2
- 7: unterbrochener Napfrand mit Aussparungen 8
- 8: Aussparung im Rand 7
- 9: Nase
- 10: Rand an der Schaltschiene 1
- 11: Napf mit unterbrochenem Napfrand 7
- 15: erste Kolben - Schaltschiene Verbindung
- 20: Napf mit nicht unterbrochenem Napfrand 21
- 21: nicht unterbrochener Napfrand
- 22: Haltelasche
- 25: zweite Kolben - Schaltschiene Verbindung
- 30: Halteharken
- 35: dritte Kolben - Schaltschiene Verbindung
- 40: Kolbenaußenteil
- 41: Kolbeninnenteil
- 42: Haltehaken
- 45: vierte Kolben - Schaltschiene Verbindung
- 50: Halteklammer
- 51: Aussparung
- 55: fünfte Kolben - Schaltschiene Verbindung
- 60: Federbügel
- 61: Federbügelende
- 62: Loch
- 63: unterbrochener Napfrand
- 55: sechste Kolben - Schaltschiene Verbindung
- 70: Doppelfederbügel
- 71: Bügelteil
- 72: Ausnehmung
- 75: siebte Kolben - Schaltschiene Verbindung
- 80: Schwalbenschwanzvorsprung
- 81: Aussparung
- 85: achte Kolben - Schaltschiene Verbindung

## Patentansprüche

1. Stellvorrichtung zum Betätigen einer Schaltschiene (1), insbesondere für ein Stufenwechselgetriebe eines Kraftfahrzeuges, bei der zum Wechseln eines Ganges die Schaltschiene (1) über jeweils einen an den längsseitigen Enden der Schaltschiene (1) angeordneten druckbeaufschlagbaren Kolben (2) hydraulisch oder pneumatisch axial verschiebbar ist, **dadurch gekennzeichnet, dass** mittels kolbenseitig und schaltschienenseitig ausgebildeten Verbindungsmitteln (25, 35, 45, 55) eine flexible Verbindung zwischen der Schaltschiene (1) und dem Kolben (2) hergestellt ist, dass die Verbindungsmittel (25, 35, 45, 55) kolbenseitig an dem Kolben ausgebildet sind, und dass
die Verbindungsmittel (25, 35, 45, 55) schaltschienenseitig an einem an der Schaltschiene (1) angeordneten Führungslager (3) der Schaltschiene (1) ausgebildet sind.

2. Stellvorrichtung nach Anspruch 1, **dadurch gekennzeichnet, dass** die flexible Verbindung (25, 35, 45, 55) zwischen dem Kolben (2) und der Schaltschiene (1) mittels einer Innenhülse (4) des als eine Kugelführung ausgebildeten Führungslagers (3) hergestellt ist.

3. Stellvorrichtung nach Anspruch 2, **dadurch gekennzeichnet, dass** der Kolben (2) als ein Napf (20) mit einem nicht unterbrochenen umlaufenden Napfrand (21) ausgebildet ist, der durch zwei an der Innenhülse (4) angeordnete Haltelaschen (22), die in den Napfrand (21) greifen, gegen ein Ablösen von der Schaltschiene (1) gehalten wird.

4. Stellvorrichtung nach Anspruch 2, **dadurch gekennzeichnet, dass** der Kolben (2) über zwei an der Innenhülse (4) angeordnete Halteharken (30), die in eine an dem Kolben (2) umlaufend angeordnete, den Kolben (2) gegenüber einem Kolbenraum (5) abdichtende Dichtlippe (6) eingeharkt sind, gegen ein Ablösen von der Schaltschiene (1) gehalten wird.

5. Stellvorrichtung nach Anspruch 2, **dadurch gekennzeichnet, dass** der Kolben (2) zweiteilig gebaut ist, mit einem Außenteil (40) und einem Innenteil (41), das mit zwei an der Innenhülse (4) angeordneten, nach außen gebogenen Haltehaken (42) verhakt ist, so dass der Kolben (2) radial zentriert ist und über die Schaltschiene (1) axial vorgespannt ist.

6. Stellvorrichtung nach Anspruch 2, **dadurch gekennzeichnet, dass** an den Kolben (2) eine Halteklammer (50) angeschweißt ist, die in benachbarte Aussparungen (51) in der Innenhülse (4) eingehängt ist.

7. Stellvorrichtung zum Betätigen einer Schaltschiene (1), insbesondere für ein Stufenwechselgetriebe eines Kraftfahrzeuges, bei der zum Wechseln eines Ganges die Schaltschiene (1) über jeweils einen an den längsseitigen Enden der Schaltschiene (1) angeordneten druckbeaufschlagbaren Kolben (2) hydraulisch oder pneumatisch axial verschiebbar ist, **dadurch gekennzeichnet, dass** mittels kolbenseitig und schaltschienenseitig ausgebildeten Verbindungsmitteln (15) eine flexible Verbindung zwischen der Schaltschiene (1) und dem Kolben (2) hergestellt ist, dass die Verbindungsmittel (15) kolbenseitig an dem Kolben ausgebildet sind,
dass der Kolben (2) als ein Napf (11) mit einem der Schaltschiene (1) zugewandten nach innen gebogenen unterbrochenen Rand (7) ausgebildet ist, mit zwei Aussparungen (8), in die ein als ein Vorsprung ausgebildeter Rand (10) der Schaltschiene (1) eingesteckt ist, so dass nach einer Verdrehung des Kolbens (2) um 90°, die Schaltschiene (1) durch den den Schaltschienenrand (10) umgreifenden Napfrand (7), gegen ein Ablösen des Kolbens (2) von der Schaltschiene (1) gesichert ist, und dass der Kolben (2) durch zwei an der Innenhülse (4) eines an der Schaltschiene angeordneten Führungslagers der Schaltschiene angeordnete, in die Aussparungen (8) greifende Nasen (9), gegen ein Zurückdrehen gesichert ist.

8. Stellvorrichtung zum Betätigen einer Schaltschiene (1), insbesondere für ein Stufenwechselgetriebe eines Kraftfahrzeuges, bei der zum Wechseln eines Ganges die Schaltschiene (1) über jeweils einen an den längsseitigen Enden der Schaltschiene (1) angeordneten druckbeaufschlagbaren Kolben (2) hydraulisch oder pneumatisch axial verschiebbar ist, **dadurch gekennzeichnet, dass** mittels kolbenseitig und schaltschienenseitig ausgebildeten Verbindungsmitteln (65, 75) eine flexible Verbindung zwischen der Schaltschiene (1) und dem Kolben (2) hergestellt ist, dass die Verbindungsmittel (65, 75) kolbenseitig an dem Kolben ausgebildet sind, und
dass die Verbindungsmittel (65, 75) schaltschienenseitig als mindestens ein an der Schaltschiene (1) ausgebildeter Federbügel (60, 70) ausgestaltet sind und eine radial flexible Verbindung (65, 75) darstellen:

9. Stellvorrichtung nach Anspruch 8, **dadurch gekennzeichnet, dass** der Federbügel als ein ringförmiger Federbügel (60) ausgebildet ist, der in einen unterbrochenen Napfrand (63) des Kolbens (2) eingesetzt ist und der mit einem abgebogenen Ende (61), das in ein Loch (62) der Schaltschiene (1) eingreift, die Schaltschiene (1) gegen den Kolben (2) hält.

10. Stellvorrichtung nach Anspruch 8, **dadurch gekennzeichnet, dass** der Federbügel als ein Doppelfederbügel (70) ausgebildet ist, der in den Rand (63) des napfförmigen Kolbens (2) eingesetzt ist und der schaltschienenseitig mit zwei abgebogenen Bügelteilen (71) jeweils in eine Ausnehmung (72) der Schaltschiene (1) eingreift.

11. Stellvorrichtung zum Betätigen einer Schaltschiene (1), insbesondere für ein Stufenwechselgetriebe eines Kraftfahrzeuges, bei der zum Wechseln eines Ganges die Schaltschiene (1) über jeweils einen an den längsseitigen Enden der Schaltschiene (1) angeordneten druckbeaufschlagbaren Kolben (2) hydraulisch oder pneumatisch axial verschiebbar ist, **dadurch gekennzeichnet, dass** mittels kolbenseitig und schaltschienenseitig ausgebildeten Verbindungsmitteln (85) eine flexible Verbindung zwischen der Schaltschiene (1) und dem Kolben (2) hergestellt ist, daß die Verbindungsmittel (85) kolbenseitig an dem Kolben ausgebildet sind, und
dass die Verbindungsmittel (85) schaltschienenseitig als eine an der Schaltschiene (1) ausgebildete Schwalbenschwanzverbindung ausgestaltet sind, bei der ein schwalbenschwanzförmiger Vorsprung (80) des Kolbens (2) in eine als Gegenstück zu dem Vorsprung (80) ausgebildete Aussparung (81) an der Schaltschiene (1) seitlich eingeschoben ist.

12. Stellvorrichtung nach einem der vorangehenden Ansprüche, **dadurch gekennzeichnet, dass** der Kolben (2) als ein Kunststoffkolben oder als ein Blechkolben ausgebildet ist.

## Claims

1. Actuating device for actuating a shift rail (1), in particular for a step-by-step variable transmission of a motor vehicle, in which, in order to change a gear, the shift rail (1) can be hydraulically or pneumatically axially moved by means of in each case one piston (2) which can be pressurized and which is arranged at the longitudinal-side ends of the shift rail (1), **characterized in that** a flexible connection is produced between the shift rail (1) and the piston (2) by connecting means (25, 35, 45, 55) which are formed at the piston side and at the shift rail side, **in that** the connecting means (25, 35, 45, 55) are formed at the piston side on the piston, and **in that** the connecting means (25, 35, 45, 55) are formed at the shift rail side on a guide bearing (3), which is arranged on the shift rail (1), of the shift rail (1).

2. Actuating device according to Claim 1, **characterized in that** the flexible connection (25, 35, 45, 55) between the piston (2) and the shift rail (1) is produced by means of an inner sleeve (4) of the guide bearing (3) which is formed as a ball guide.

3. Actuating device according to Claim 2, **characterized in that** the piston (2) is formed as a cup (20) with a continuous encircling cup edge (21), which cup (20) is held, so as to be prevented from detaching from the shift rail (1), by means of two retaining lugs (22) which are arranged on the inner sleeve (4) and engage in the cup edge (21).

4. Actuating device according to Claim 2, **characterized in that** the piston (2) is held, so as to be prevented from detaching from the shift rail (1), by means of two holding rakes (30) which are arranged on the inner sleeve (4) and are raked into a sealing lip (6) which is arranged around the piston (2) and which seals off the piston (2) with respect to a piston space (5).

5. Actuating device according to Claim 2, **characterized in that** the piston (2) is of two-part construction, with an outer part (40) and an inner part (41) which is hooked with two outwardly-bent holding hooks (42) which are arranged on the inner sleeve (4), so that the piston (2) is radially centred and is axially preloaded by means of the shift rail (1).

6. Actuating device according to Claim 2, **characterized in that** a holding clamp (50) is welded onto the piston (2), which holding clamp (50) is hooked into adjacent cutouts (51) in the inner sleeve (4).

7. Actuating device for actuating a shift rail (1), in particular for a step-by-step variable transmission of a motor vehicle, in which, in order to change a gear, the shift rail (1) can be hydraulically or pneumatically axially moved by means of in each case one piston (2) which can be pressurized and which is arranged at the longitudinal-side ends of the shift rail (1), **characterized in that** a flexible connection is produced between the shift rail (1) and the piston (2) by connecting means (15) which are formed at the piston side and at the shift rail side, **in that** the connecting means (15) are formed at the piston side on the piston, **in that** the piston (2) is formed as a cup (11) with an inwardly bent, discontinuous encircling edge (7) facing the shift rail (1), with two cutouts (8) into which is plugged an edge (10), which is formed as a projection, of the shift rail (1), so that after a rotation of the piston (2) through 90°, the shift rail (1) is secured by means of the cup edge (7), which engages over the shift rail edge (10), so as to prevent the piston (2) from detaching from the shift rail (1), and **in that** the piston (2) is prevented from rotating back by means of two lugs (9) which are arranged on the inner sleeve (4) of a guide bearing, which is arranged on the shift rail, of the shift rail and engage into the cutouts (8).

8. Actuating device for actuating a shift rail (1), in particular for a step-by-step variable transmission of a motor vehicle, in which, in order to change a gear, the shift rail (1) can be hydraulically or pneumatically axially moved by means of in each case one piston (2) which can be pressurized and which is arranged at the longitudinal-side ends of the shift rail (1), **characterized in that** a flexible connection is produced between the shift rail (1) and the piston (2) by connecting means (65, 75) which are formed at the piston side and at the shift rail side, **in that** the connecting means (65, 75) are formed at the piston side on the piston, and **in that** the connecting means (65, 75) are configured at the shift rail side as at least one spring bracket (60, 70) which is formed on the shift rail (1), and constitute a radially flexible connection (65, 75).

9. Actuating device according to Claim 8, **characterized in that** the spring bracket is formed as an annular spring bracket (60) which is inserted in a discontinuous cup edge (63) of the piston (2), and which, with a bent end (61) which engages into a hole (62) of the shift rail (1), holds the shift rail (1) against the piston (2).

10. Actuating device according to Claim 8, **characterized in that** the spring bracket is formed as a double spring bracket (70) which is inserted into the edge (63) of the cup-shaped piston (2) and which engages at the shift rail side with two bent bracket parts (71) in each case into a recess (72) of the shift rail (1).

11. Actuating device for actuating a shift rail (1), in particular for a step-by-step variable transmission of a motor vehicle, in which, in order to change a gear, the shift rail (1) can be hydraulically or pneumatically axially moved by means of in each case one piston (2) which can be pressurized and which is arranged at the longitudinal-side ends of the shift rail (1), **characterized in that** a flexible connection is produced between the shift rail (1) and the piston (2) by connecting means (85) which are formed at the piston side and at the shift rail side, **in that** the connecting means (85) are formed at the piston side on the piston, and **in that** the connecting means (85) are configured at the shift rail side as a dovetail connection which is formed on the shift rail (1), in which a dovetail-shaped projection (80) of the piston (2) is inserted laterally into a cutout (81), which is formed as a counterpart to the projection (80), on the shift rail (1).

12. Actuating device according to one of the preceding claims, **characterized in that** the piston (2) is formed as a plastic piston or as a sheet metal piston.

## Revendications

1. Dispositif actionneur pour actionner un rail de changement de vitesse (1), notamment pour une boîte de vitesses à rapports étagés d'un véhicule automobile, dans lequel le rail de changement de vitesse (1), pour changer une vitesse, peut être déplacé axialement de manière hydraulique ou pneumatique par le biais d'un piston (2) pouvant être sollicité en pression et disposé , aux extrémités longitudinales respectives du rail de changement de vitesse (1), **caractérisé en ce que** l'on réalise une connexion flexible entre le rail de changement de vitesse (1) et le piston (2) par le biais de moyens de connexion (25, 35, 45, 55) réalisés du côté du piston et du rail de changement de vitesse, **en ce que** les moyens de connexion (25, 35, 45, 55) côté piston sont réalisés sur le piston et **en ce que** les moyens de connexion (25, 35, 45, 55) côté rail de changement de vitesse sont réalisés sur un palier de guidage (3) du rail de changement de vitesse (1) disposé sur le rail de changement de vitesse (1).

2. Dispositif actionneur selon la revendication 1, **caractérisé en ce que** la connexion flexible (25, 35, 45, 55) entre le piston (2) et le rail de changement de vitesse (1) est réalisée au moyen d'un manchon interne (4) du palier de guidage (3) réalisé sous forme de guidage à bille.

3. Dispositif actionneur selon la revendication 2, **caractérisé en ce que** le piston (2) est réalisé sous forme de coupelle (20) avec un bord de coupelle (21) périphérique non interrompu, qui est maintenu de manière à empêcher un décollement du rail de changement de vitesse (1) par deux pattes de retenue (22) disposées sur le manchon interne (4), qui viennent en prise dans le bord de coupelle (21).

4. Dispositif actionneur selon la revendication 2, **caractérisé en ce que** le piston (2) est maintenu de manière à empêcher un décollement du rail de changement de vitesse (1) par le biais de deux râteaux de retenue (30) disposés sur le manchon interne (4), qui sont accrochés dans une lèvre d'étanchéité (6) disposée tout autour du piston (2) et séparant hermétiquement le piston (2) d'une chambre de piston (5).

5. Dispositif actionneur selon la revendication 2, **caractérisé en ce que** le piston (2) est réalisé en deux parties, avec une partie extérieure (40) et une partie intérieure (41) qui est accrochée avec deux crochets de retenue (42) cintrés vers l'extérieur et disposés sur le manchon interne (4), de sorte que le piston (2) soit centré radialement et soit précontraint axialement par le biais du rail de changement de vitesse (1).

6. Dispositif actionneur selon la revendication 2, **caractérisé en ce que** l'on soude sur le piston (2) une pince de retenue (50) qui est accrochée dans des évidements adjacents (51) dans le manchon interne (4).

7. Dispositif actionneur pour actionner un rail de changement de vitesse (1), notamment pour une boîte de vitesses à rapports étagés d'un véhicule automobile, dans lequel le rail de changement de vitesse (1), pour changer une vitesse, peut être déplacé axialement de manière hydraulique ou pneumatique par le biais d'un piston (2) pouvant être sollicité en pression et disposé aux extrémités longitudinales respectives du rail de changement de vitesse (1), **caractérisé en ce que** l'on réalise une connexion flexible entre le rail de changement de vitesse (1) et le piston (2) par le biais de moyens de connexion (15) réalisés du côté du piston et du rail de changement de vitesse, **en ce que** les moyens de connexion (15) côté piston sont réalisés sur le piston, **en ce que** le piston (2) est- réalisé sous forme de coupelle (11) avec un bord interrompu (7) tourné vers le rail de changement de vitesse (1) et cintrée vers l'intérieur, avec deux évidements (8) dans lesquels est emboîté un bord (10) du rail de changement de vitesse (1) réalisé sous forme de saillie, de sorte qu'après une rotation du piston (2) de 90°, le rail de changement de vitesse (1) soit fixé par le bord (7) de la coupelle venant en prise autour du bord (10) du rail de changement de vitesse pour empêcher un décollement du piston (2) du rail de changement de vitesse (1), et **en ce que** le piston (2) est fixé par deux ergots (9) disposés sur le manchon interne (4) d'un palier de guidage du rail de changement de vitesse disposé sur le rail de changement de vitesse et venant en prise dans les évidements (8) pour empêcher son retour par rotation.

8. Dispositif actionneur pour actionner un rail de changement de vitesse (1), notamment pour une boîte de vitesses à rapports étagés d'un véhicule automobile, dans lequel le rail de changement de vitesse (1), pour changer une vitesse, peut être déplacé axialement de manière hydraulique ou pneumatique par le biais d'un piston (2) pouvant être sollicité en pression et disposé aux extrémités longitudinales respectives du rail de changement de vitesse (1), **caractérisé en ce que** l'on réalise une connexion flexible entre le rail de changement de vitesse (1) et le piston (2) par le biais de moyens de connexion (65, 75) réalisés du côté du piston et du rail de changement de vitesse, **en ce que** les moyens de connexion (65, 75) côté piston sont réalisés sur le piston, et **en ce que** les moyens de connexion (65, 75) côté rail de changement de vitesse sont configurés sous la forme d'au moins un étrier à ressort (60, 70) réalisé sur le rail de changement de vitesse (1) et constituent une connexion flexible radialement (65, 75).

9. Dispositif actionneur selon la revendication 8, **caractérisé en ce que** l'étrier à ressort est réalisé sous la forme d'un étrier à ressort annulaire (60) qui est inséré dans un bord de coupelle interrompu (63) du piston (2), et qui maintient le rail de changement de vitesse (1) contre le piston (2) par une extrémité recourbée (61) qui vient en prise dans un trou (62) du rail de changement de vitesse (1).

10. Dispositif actionneur selon la revendication 8, **caractérisé en ce que** 1'étrier à ressort est réalisé sous la forme d'un double étrier à ressort (70) qui est inséré dans le bord (63) du piston en forme de coupelle (2) et qui vient en prise côté rail de changement de vitesse avec deux parties d'étrier recourbées (71) dans un évidement respectif (72) du rail de changement de vitesse (1).

11. Dispositif actionneur pour actionner un rail de changement de vitesse (1), notamment pour une boîte de vitesses à rapports étagés d'un véhicule automobile, dans lequel le rail de changement de vitesse (1), pour changer une vitesse, peut être déplacé axialement de manière hydraulique ou pneumatique par le biais d'un piston (2) pouvant être sollicité en pression et disposé aux extrémités longitudinales respectives du rail de changement de vitesse (1), **caractérisé en ce que** l'on réalise une connexion flexible entre le rail de changement de vitesse (1) et le piston (2) par le biais de moyens de connexion (85) réalisés du côté du piston et du rail de changement de vitesse, **en ce que** les moyens de connexion (85) côté piston sont réalisés sur le piston et **en ce que** les moyens de connexion (85) côté rail de changement de vitesse sont configurés sous forme de connexion en queue d'aronde réalisée sur le rail de changement de vitesse (1), dans laquelle une saillie en forme de queue d'aronde (80) du piston (2) est enfoncée latéralement dans un évidement (81) sur le rail de changement de vitesse (1), réalisée sous forme de pièce conjuguée à la saillie (80).

12. Dispositif actionneur selon l'une quelconque des revendications précédentes, **caractérisé en ce que** le piston (2) est réalisé sous la forme d'un piston en plastique ou d'un piston en tôle.
